Europäisches Patentamt

**European Patent Office**

Office européen des brevets

(11) veröffentlichungsnummer: **0 016 247**

**A1**

(12) **EUROPÄISCHE PATENTANMELDUNG**

(21) Anmeldenummer: **79104071.0**

(22) Anmeldetag: **20.10.79**

(51) Int. Cl.³: **C 08 G 59/42**
C 09 J 3/16, C 09 J 3/14

(30) Priorität: **13.12.78 GB 4833478**
**29.06.79 DE 2926284**

(43) Veröffentlichungstag der Anmeldung:
**01.10.80 Patentblatt 80/20**

(84) Benannte Vertragsstaaten:
**AT CH DE FR GB IT**

(71) Anmelder: **Th. Goldschmidt AG**
**Goldschmidtstrasse 100**
**D-4300 Essen(DE)**

(72) Erfinder: **Fock, Jürgen, Dr.**
**Mörsenbroicher Weg 114**
**D-4000 Düsseldorf 30(DE)**

(72) Erfinder: **Schedlitzki, Dietmar, Dr.**
**Potthoffs Börde 18**
**D-4300 Essen(DE)**

(54) **Ein Acrylcopolymerisat und ein Epoxyd-Harz enthaltendes hitzehärtbares Klebemittel und seine Verwendung zur Verklebung von Kunststoffen mit Metallen.**

(57) Das Klebmittel enthält als wirksame Bestandteile
a) 20 bis 80 Gew.-% eines
Acrylcopolymerisates einer Grenzviskosität von 0,1 bis 0,8 [100 ml . g⁻¹] bei 20°C in Methylacetat,
b) 10 bis 70 Gew.-% eines Epoxidharzes und/oder eines Glycidylgruppen enthaltenden Phenolformaldehydharzes,
c) 0,2 bis 15 Gew.-% eines in der Wärme wirksamen Härters für die Komponente b),
d) 0 bis 5 Gew.-% eines Beschleunigers für die Reaktion der Komponente b) mit den Komponenten a) und c),
wobei die Summe a) bis d) 100 Gew.-% ergeben muß, gegebenenfalls neben üblichen Zusätzen.
Die erfindungsgemäßen Klebmittel weisen erhöhte Temperaturbelastbarkeit, bessere Wasserbeständigkeit, insbesondere Heißwasserbeständigkeit auf. Die Verarbeitungstemperaturen für die Verklebung liegen in einem Bereich von 100 bis 130°C.

Th.  G o l d s c h m i d t  AG,  Essen

Hitzehärtbares Klebmittel

Die Erfindung betrifft hitzehärtbare Klebmittel auf der Basis von Säuregruppen enthaltenden Acrylatpolymerisaten und Epoxidharzen bzw. Glycidylgruppen enthaltenden Phenolformaldehydharzen.

Klebmittel auf Acrylharzbasis sind aus den US-Patentschriften 2 795 564 sowie 3 728 150 bekannt. Es hat sich jedoch bei Verwendung dieser Klebmittel gezeigt, daß die erhaltenen Klebstellen sehr unterschiedliche Eigenschaften aufweisen und daß insbesondere die Zugscherfestigkeit in weiten Grenzen schwankt.

Der DE-OS 25 24 197 lag die Aufgabe zugrunde, die Bindungseigenschaften solcher Klebstoffe, insbesondere deren Zugscherfestigkeit zu verbessern. Dies wurde durch ein Klebmittel erreicht, welches aus

20 bis 45 Gew.-% Acryl- und/oder Methacrylnitril
45 bis 70 Gew.-% eines Acrylsäurealkylesters mit 1 bis 12 C-Atomen im Alkylrest und
1 bis 10 Gew.-% Acryl-, Methacryl- oder Itaconsäure

besteht, wobei wesentlich ist, daß das Copolymerisat eine Grenzviskosität von 0,1 bis 0,8 $[100 \text{ ml} \cdot \text{g}^{-1}]$ bei 20°C in Chloroform aufweist und wobei das Polymerisat gegebenenfalls mit bis zu 35 Gew.-% eines Epoxidharzes oder eines Glycidylgruppen enthaltenden Phenolformaldehydharzes vermischt sein kann. Derartige Klebmittel haben eine erheblich verbesserte Zugscherfestigkeit und Trommel- sowie Winkelschälfestigkeit. Sie werden insbesondere als Folie mit oder ohne Träger zur Verklebung von Metalloberflächen miteinander, aber auch zur Verklebung von Kunststoff-Folien mit Metallen verwendet.

Die vorliegende Erfindung knüpft an diesen Stand der Technik an. Bei den Klebmitteln des Standes der Technik nimmt die Zerreißfestigkeit, die Schälfestigkeit und die Wasserfestigkeit bei höheren Temperaturen, insbesondere bei Temperaturen von > $20^{\circ}$C, vorzugsweise 50 bis $90^{\circ}$C, mehr oder weniger stark ab. Aus anwendungstechnischen Gründen ist jedoch erwünscht, auch in diesen Temperaturbereichen hohe Klebfestigkeit zu erreichen.

Der Erfindung liegt deshalb die Aufgabe zugrunde, Klebmittel der vorgenannten Art aufzufinden, bei welchen die Eigenschaften der Klebfuge bei Temperaturbelastung, insbesondere innerhalb eines weiten Temperaturbereiches verbessert werden sollen. Außerdem soll die Wasserbeständigkeit, insbesondere die Heißwasserbeständigkeit, der Klebfuge erhöht werden. Gleichzeitig ist es erwünscht, die Verarbeitungstemperatur des Klebers möglichst niedrig, insbesondere unterhalb $130^{\circ}$C, zu halten.

Überraschenderweise zeigte sich, daß diese Eigenschaften bei einem hitzehärtbaren Klebmittel zu finden sind, welches erfindungsgemäß als wirksame Bestandteile

a) 20 bis 80 Gew.-% eines Copolymerisates, welches durch Polymerisation von

$a_1$) 20 bis 45 Gew.-% Acryl- und/oder Methacrylnitril,
$a_2$) 35 bis 65 Gew.-% eines oder mehrerer Alkylester der Acryl- und/oder Methacrylsäure mit 1 bis 12 C-Atomen im Alkylrest,
$a_3$) 3 bis 20 Gew.-% Acryl-, Methacryl- und/oder Itaconsäure,
$a_4$) 0 bis 15 Gew.-% Acryl- und/oder Methacrylamid, wobei die Summe von $a_3$) und $a_4$) mindestens 10 Gew.-% betragen muß,
$a_5$) 0 bis 10 Gew.-% N-Vinylpyrrolidon,

erhalten worden ist, wobei die Summe der Monomeren $a_1$) bis $a_5$) 100 Gew.-% ergeben muß und wobei das Copolymerisat eine Grenzviskosität von 0,1 bis 0,8 $\underline{/}$ 100 ml $\cdot$ g$^{-1}$ $\underline{/}$ bei 20$^{\circ}$C in Methylacetat aufweist,

b) 10 bis 70 Gew.-% eines Epoxidharzes und/oder eines Glycidylgruppen enthaltenden Phenolformaldehydharzes,

c) 0,2 bis 15 Gew.-% eines in der Wärme wirksamen Härters für die Komponente b),

d) 0 bis 5 Gew.-% eines Beschleunigers für die Reaktion der Komponente b) mit den Komponenten a) und c), wobei die Summe a) bis d) 100 Gew.-% ergeben muß,

gegebenenfalls neben üblichen Zusätzen, wie Klebhilfsmittel, Haftvermittler, Pigmente und Füllstoffe, enthält.

Besonders bevorzugt ist ein Klebmittel, welches dadurch gekennzeichnet ist, daß es

35 bis 75 Gew.-% der Komponente a),
20 bis 55 Gew.-% der Komponente b),
0,5 bis 10 Gew.-% der Komponente c) und
0,05 bis 2 Gew.-% der Komponente d),

enthält.

Die Komponente a), welche in dem wirksamen Bestandteil des Klebmittels zu 20 bis 80 Gew.-% enthalten ist, kann in an sich bekannter Weise durch Emulsions- oder Lösungspolymerisation hergestellt werden. Als Alkylester der Acryl- bzw. der Methacrylsäure werden vorzugsweise die von geradkettigen aliphatischen Alkoholen herrührenden Alkylester verwendet. Besonders bevorzugt sind dabei Alkylreste mit 1 bis 4 C-Atomen.

Besonders brauchbar sind Copolymerisate mit einer Grenzviskosität von 0,2 bis 0,55 $\underline{/}$ 100 ml $\cdot$ g$^{-1}$ $\underline{/}$ bei 20$^{\circ}$C in Methylacetat.

Als Epoxidharze können wiederum die in der DE-OS 25 24 197 genannten verwendet werden: Epoxide mehrfach ungesättigter Kohlenwasserstoffe, Glycidyläther mehrwertiger Alkohole, Glycidyläther mehrwertiger Phenole, Glycidyläther von Polyglykolen, Glycidyläther von Polyestern, Glycidyläther von Kondensationsprodukten von ein- oder mehrwertigen Phenolen mit Aldehyden, Polymerisate von Glycidylestern ungesättigter Carbonsäuren oder deren Anhydriden und epoxydierte Ester von langkettigen ungesättigten Fettsäuren mit einem Alkoholrest von 1 bis 18 Kohlenstoffatomen.

Glycidylgruppen enthaltende Phenolharze können dadurch hergestellt werden, daß man Phenol und Formaldehyd in einem Molverhältnis < 1 : 1 zu wasserlöslichen, linearen Novolaken kondensiert und diese Kondensationsprodukte mit Epichlorhydrin umsetzt.

Die Reaktion der Komponente b) mit der Komponente a) wird durch die Komponente c) beschleunigt. Diese stellt einen in der Wärme wirksamen Härter dar, wobei generell die bekannten Härter für Epoxidharze bzw. Glycidylgruppen verwendbar sind.

Bevorzugt werden als Härter mehrbasische organische Carbonsäuren oder deren Anhydride, wie z.B. Maleinsäureanhydrid, Pyromellithsäuredianhydrid, Phthalsäureanhydrid, Trimellithsäureanhydrid oder Tetrahydrophthalsäureanhydrid, verwendet.

Weiter geeignet sind aromatische Polyamine, wie z.B. m-Phenylendiamin m-Xylylendiamin, 4,4'-Diaminodiphenylmethan, 4,4'-Diaminodiphenylsulfon oder Benzidin, Dicyandiamid, mit Alkyl- oder Arylgruppen substituierte Dicyandiamide oder Addukte aus Dicyandiamid bzw. substituierten Dicyandiamiden und Epoxidharzen.

Die Zubereitung kann als wirksamen Bestandteil ferner noch Beschleuniger für die Reaktion der Komponente b) mit der Komponente a) bzw. c) enthalten, wobei sich tertiäre Amine, wie z.B. N,N-Dimethylbenzylamin, α-Methyl-N,N-dimethylbenzylamin, o-(N,N-Dimethylaminomethyl-)phenol, 2,4,6-Tris-(N,N-dimethylaminomethyl-)phenol, N,N-Dimethylanilin oder N,N-Diäthylanilin, besonders bewährt haben.

Die erfindungsgemäßen Klebmittel können in Form gegebenenfalls Träger enthaltender Folien, als Lösung in organischen Lösungsmitteln oder in Form einer wäßrigen Dispersion verwendet werden. Aus den bekannten Gründen des Umweltschutzes und wegen der einfachen Verarbeitbarkeit ist die Verwendung einer wäßrigen Dispersion besonders bevorzugt. Es empfiehlt sich in diesem Falle, die Komponente a) durch Emulsionspolymerisation in an sich bekannter Weise herzustellen und dieser Dispersion die übrigen Komponenten zuzusetzen, wobei man gegebenenfalls der Dispersion noch zusätzliche Dispergierhilfsmittel zugeben kann. Derartige Dispergierhilfsmittel sind ionogene oder nichtionogene Emulgatoren oder Schutzkolloide.

Das erfindungsgemäße Klebmittel kann noch weitere Hilfsstoffe enthalten. Beispiele derartiger Hilfsstoffe sind Klebhilfsmittel, die im englischen Sprachgebrauch als sogenannte "tackifier" bezeichnet werden, wie z.B. Polychloropren, Acrylnitrilbutadien- Copolymerisate, Alkylphenolharze, Terpenphenolharze, hydroxylgruppenhaltige Polyester, Polyamide oder Polyurethane. Diese Klebhilfsmittel werden vorzugsweise in Mengen bis zu 15 Gew.-%, bezogen auf 100 Gew.-% der Bestandteile a) bis d), zugesetzt.

Den erfindungsgemäßen Klebmitteln können noch weitere Hilfsstoffe zugesetzt werden. Beispiele solcher Hilfsstoffe sind als sogenannte Haftvermittler bekannte Verbindungen, wie Aminoalkyl-tri- alkoxysilane, Glycidoxyalkyl-trialkoxysilane oder Vinyltrialkoxy- silane.

Das Klebmittel kann durch an sich bekannte Zusätze modifiziert werden, und man kann dem Klebmittel in an sich bekannter Weise Pigmente, lösliche Farbstoffe sowie Füllstoffe beigeben. Beispiele von Pigmenten sind Titandioxid, Chromdioxid, Cadmiumselenid oder Bleichromat. Zusätzlich zu den Pigmenten oder anstelle der Pigmente können dem Klebmittel Füllstoffe, wie Calciumcarbonat, Bariumsulfat, pyrogen erzeugte Kieselsäure, Aluminiumoxid oder Magnesiumoxid zugesetzt werden. Zur Erhöhung der Schälfestigkeit eignet sich der Zusatz eines Polyamids. Gleichzeitig wird hierdurch auch die Zähigkeit des Klebmittels erhöht.

Die erfindungsgemäßen Klebmittel erfüllen die eingangs genannten Anforderungen. Es ist mit ihrer Hilfe möglich, Kunststoffe, insbesondere Kunststoff-Folien, auf Metalloberflächen zu verkleben, wobei für die Verklebung Temperaturen von 100 bis 130°C aus-

0016247

reichend sind. Hierdurch gelingt es, die thermische Belastung der Kunststoff-Folien gering zu halten und insbesondere die Oberflächengüte der Kunststoff-Folien, wie z.B. deren Glanzeigenschaften zu erhalten.

Die mit den erfindungsgemäßen Klebmitteln erhaltenen Klebfugen weisen bei thermischer Belastung eine geringere Erniedrigung der Festigkeitswerte als bei den Klebmitteln des Standes der Technik auf. Die Wasserfestigkeit der Klebfuge wird ebenfalls verbessert.

Die bei der Verklebung erhaltenen Verbundwerkstoffe aus Kunststoff und Metall können unbeschadet der Verklebung in üblicher Weise verformt werden, ohne daß bei der Verformung die Haftung der Kunststoff-Folie am Metallblech beeinträchtigt wird.

Die folgenden Beispiele dienen der weiteren Erläuterung der Erfindung und zeigen die Herstellung der erfindungsgemäßen Klebmittel und die Eigenschaften der mit ihnen hergestellten Verbundwerkstoffe.

## A. Herstellung der erfindungsgemäßen Klebmittel

### 1. Rohstoffe

#### 1.1 Acrylcopolymerisate a)

Die Copolymerisate a) werden entweder durch Lösungs- oder durch Emulsionspolymerisation hergestellt.

Im Falle der Lösungspolymerisation werden die Monomeren $a_1$) bis $a_5$) in einem Lösungsmittelgemisch aus 50 Gew.-% Toluol, 30 Gew.-% Aceton und 20 Gew.-% Äthanol bei 70 bis 80$^{\circ}$C unter Zusatz von 0,3 bis 0,6 Gew.-% Azodiisobuttersäurenitril und 0,3 Gew.-% n-Dodecylmercaptan gelöst und die Copolymerisate durch übliche Lösungspolymerisation hergestellt. Der Feststoffgehalt in der Copolymerisatlösung liegt bei 45 Gew.-%. Die chemische Zusammensetzung der einzelnen Copolymerisate und deren Grenzviskosität geht aus Tabelle 1 hervor.

Bei der Herstellung der Copolymerisate a) durch Emulsionspolymerisation wird in bekannter Weise nach dem Emulsionszulaufverfahren aus

1000,0 g der Monomeren $a_1$) bis $a_5$)
1000,0 g Wasser
    2,5 g Kaliumperoxydisulfat
    2,0 g Natriumlaurylsulfat
    5,0 g Triisobutylphenolpolyäthylenglykoläthersulfat
    6,0 g Polyäthylenglykoltriglycerid

bei $85^{\circ}$C in ca. 6 h eine Polymerdispersion hergestellt. Der
Feststoffgehalt liegt bei etwa 50 Gew.-%. Die chemische
Zusammensetzung der Copolymerisate a) geht aus Tabelle 1
hervor.

1.2 Epoxidharze b)
Die verwendeten handelsüblichen Epoxidharze $b_1$) und $b_2$)
werden durch Kondensation von Bisphenol A mit Epichlorhydrin
erhalten und haben folgende Epoxidäquivalente:

Epoxidharz $b_1$)              180 g/val
Epoxidharz $b_2$)              450 g/val

Das Epoxidharz $b_3$) ist ein handelsübliches Epoxidnovolakharz
mit einem Epoxidäquivalent von 190 g/val.

1.3 Härter c)
Die chemische Zusammensetzung der eingesetzten Härter c) geht
aus Tabelle 1 hervor.

2. Zubereitung der Klebmittel
Nachfolgend wird die Zubereitung der Klebmittel in organischen
Lösungsmitteln in wäßriger Phase und in Form von Klebfolien
beschrieben. Die Mengenangaben der einzelnen Komponenten sind
Tabelle 1 zu entnehmen. Sie beziehen sich jeweils auf Feststoffanteile.

0016247

2.1 Klebmittellösungen

Zur Herstellung von Klebmittellösungen werden die Epoxidharze b) und Härter c) in der Lösung des Acrylcopolymerisats a) gelöst, wobei zur Verdünnung des Klebers und Einstellung der gewünschten Viskosität weitere Lösungsmittel
zugesetzt werden können. Als Lösungsmittel eignen sich vor
allem Ketone, wie Aceton, Methyläthylketon oder Methyl-n-
propylketon, oder niedere Alkohole, wie Methanol, Äthanol
oder n-Propanol, aber auch Ester, wie Äthyl- oder Butylacetat,
Aromaten, wie Toluol oder Xylol, oder partiell verätherte
Glykole, wie Methylglykol oder Äthylglykol.

2.2 Wäßrige Klebmittel-Dispersionen

Zur Herstellung wäßriger Klebmitteldispersionen wird aus dem
Epoxidharz $b_1$) nach Zusatz von 3,5 % Nonylphenolpolyäthylenglykoläther auf üblichem Wege eine 50 gewichtsprozentige
Emulsion hergestellt.

Die feingemahlenen Härter c) werden mit 5,5 Gew.-% eines
Tensidgemisches, bestehend aus

60 Gew.-% eines Nonylphenolpolyäthylenglykoläthers,
30 Gew.-% eines äthoxylierten Sorbitanmonooleates,
10 Gew.-% eines Sorbitanmonooleates,

in Wasser mit Hilfe einer schnellaufenden Rührscheibe
(Dissolver) angepastet. Der Feststoffgehalt der Paste liegt
bei ca. 60 Gew.-%. Die erhaltene Paste wird zusammen mit der
Epoxidharzemulsion in die Polymerdispersion des Copolymerisats a) eingerührt.

Um die Schaumbildung bei der Pastenherstellung und Abmischung
mit der Polymerdispersion in Grenzen zu halten, können geringe
Mengen handelsüblicher, bevorzugt siliconfreier Entschäumer
zugesetzt werden. Die Viskosität der Klebmittel-Dispersionen
kann man bei Bedarf durch an sich bekannte organische oder
anorganische Verdickungsmittel, die nachträglich eingerührt
werden, einstellen.

0016247

- 9 -

2.3 Klebfolien

Zur Herstellung der Klebfolien werden die unter 2.1 beschriebenen Klebmittellösungen auf siliconisiertes Trennpapier gegossen. Durch Verdampfen des Lösungsmittels wird bei 70°C eine 80 μm starke Folie, die flexibel, transparent und bei Raumtemperatur klebfrei ist, hergestellt.

Im anderen Falle werden die unter 2.2 beschriebenen Klebmittel-Dispersionen auf ein Polyestervlies mit einem Flächengewicht von 25 g/m$^2$ aufgetragen. Nach Abdunstung des Wassers bei 80°C erhält man eine trägerhaltige Klebfolie mit einem Flächengewicht von 140 g/m$^2$.

Tabelle 1

Erläuterung der Abkürzungen der nachfolgenden Tabelle 1:

| | | |
|---|---|---|
| L | = | Lösung |
| D | = | wäßrige Dispersion |
| F | = | trägerfreie Klebfolie |
| FT | = | trägerhaltige Klebfolie |
| LP | = | Lösungspolymerisation |
| EP | = | Emulsionspolymerisation |
| AA | = | Acrylamid |
| ÄA | = | Äthylacrylat |
| AN | = | Acrylnitril |
| AS | = | Acrylsäure |
| ÄHA | = | 2-Äthylhexylacrylat |
| DA | = | N,N-Diäthylanilin |
| DBA | = | N,N-Dimethylbenzylamin |
| MAA | = | Methacrylamid |
| MAN | = | Methacrylnitril |
| MAS | = | Methacrylsäure |
| MMA | = | Methylmethacrylat |
| VP | = | Vinylpyrrolidon |

Tabelle 1 - Klebmittelrezepturen

| Rezeptur Nr. | Klebmittelform | Copolymerisat a) | | | | Epoxidharz b) Gew.-Teile | Härter c) Gew.-Teile | Beschleuniger d) Gew.-Teile | Sonstige Zusätze Gew.-Teile |
|---|---|---|---|---|---|---|---|---|---|
| | | Zusammensetzung Gew.-% | Art der Polymerisation | Grenzviskosität 100 ml/g | Gew.-Teile | | | | |
| 1 | L | 33 AN $a_1$<br>52 ÄA $a_2$<br>15 AS $a_3$ | LP | 0,22 | 71 | 25,4 $b_1$ | 3,6 Pyromellith-säuredianhydrid | – | – |
| 2 | L | 31 AN $a_1$<br>11 MMA $a_2$<br>42 ÄA $a_2$<br>16 AS $a_3$ | LP | 0,27 | 67 | 24,8 $b_2$ | 8,0 Endomethylen-tetrahydro-phthalsäure-anhydrid | 0,2 DBA | – |
| 3 | L | 30 AN $a_1$<br>18 MMA $a_1$<br>36 ÄA $a_2$<br>11 AS $a_3$<br>5 AA $a_4$ | LP | 0,31 | 66 | 30,2 $b_3$ | 3,8 4,4'-Diamino-diphenyl-methan | – | – |
| 4 | L | 31 AN $a_1$<br>54 ÄA $a_2$<br>10 AS $a_3$<br>5 AA $a_4$ | LP | 0,19 | 70 | 26,2 $b_1$ | 3,8 Pyromellith-säuredianhydrid | – | – |
| 5 | L | 30 AN $a_1$<br>52 ÄA $a_2$<br>10 AS $a_3$<br>5 AA $a_4$<br>3 VP $a_5$ | LP | 0,20 | 71 | 25,4 $b_1$ | 3,6 Pyromellith-säuredianhydrid | – | – |
| 6 | L | 37 MAN $a_1$<br>47 ÄHA $a_2$<br>10 AS $a_3$<br>6 AA $a_4$ | LP | 0,24 | 70 | 26,2 $b_1$ | 3,8 Pyromellith-säuredianhydrid | – | – |

0016247

| Rezeptur Nr. | Kleb-mittel-form | Copolymerisat a) Zusammen-setzung Gew.-% | Art der Poly-meri-sation | Grenz-visko-sität 100 ml/g | Gew.-Teile | Epoxid-harz b) Gew.-Teile | Härter c) Gew.-Teile | Beschleu-niger d) Gew.-Teile | Sonstige Zu-sätze Gew.-Teile |
|---|---|---|---|---|---|---|---|---|---|
| 7 | L | 31 AN $a_1$<br>54 ÄA $a_2$<br>7,5 AS $a_3$<br>7,5 AA $a_4$ | LP | 0,18 | 70 | 26,2 $b_1$ | 3,8 Pyromellith-säuredianhy-drid | – | – |
| 8 | D | 36 AN $a_1$<br>53 ÄA $a_2$<br>11 MAS $a_3$ | EP | 0,35 | 60 | 34 $b_1$ | 5,6 4,4'-Diamino-diphenyl-sulfon | 0,4 DA | – |
| 9 | D | 30 AN $a_1$<br>18 MMA $a_2$<br>39 ÄA $a_2$<br>10 MAS $a_3$<br>3 MAA $a_4$ | EP | 0,40 | 64 | 27,3 $b_1$ | 8,55 Phthalsäure | 0,15 DBA | – |
| 10 | F | wie 1 | LP | 0,22 | 69 | 27,6 $b_3$ | 3,4 Pyromellith-säuredianhy-drid | – | 15 Titan-dioxid |
| 11 | F | wie 3 | LP | 0,31 | 70 | 27,0 $b_2$ | 3,0 4,4'-Diamino-diphenyl-sulfon | – | 0,5 γ-Amino-propyl-triäth-oxysilan |
| 12 | FT | wie 8 | EP | 0,35 | 71 | 22,6 $b_1$ | 6,2 Phthalsäure | 0,2 DBA | 3 Terpenphe-nolharz |
| 13 | FT | wie 9 | EP | 0,40 | 60 | 35,9 $b_1$ | 4,1 4,4'-Diamino-diphenylmethan | – | 4 Poly-amid 6,6 |
| Vergleichsklebmittel (DE-AS 25 24 197) | | | | | | | | | |
| | FT | 35,4 AN $a_1$<br>60,9 ÄA $a_2$<br>3,7 AS $a_3$ | LP | 0,35 | 80 | 20 $b_1$ | – | – | – |

0016247

B. Verklebung und anwendungstechnische Prüfung der Klebmittel

Zur anwendungstechnischen Prüfung der Klebmittel werden drei Festigkeitsprüfungen herangezogen:

a) Binde- bzw. Zugescherfestigkeit nach DIN 53 283
b) Winkelschälfestigkeit nach DIN 53 282
c) Trommelschälfestigkeit nach DIN 53 295

Zur Prüfung der Binde- und Winkelschälfestigkeit werden gemäß DIN 53 281 aus Aluminiumblechen Al Cu Mg 2pl FH (DIN 1783) und den Klebemitteln Probekörper hergestellt. Die Aushärtung der Klebmittel wird bei 115°C während 15 min unter einem Preßdruck von 0,4 N/mm² vorgenommen. Im Falle der flüssigen Klebmittel müssen die Lösungsmittel vor der Aushärtung abgedunstet werden.

Zur Prüfung der Trommelschälfestigkeit werden Probekörper aus einer 1,2 mm starken, auf der Klebseite aufgerauhten und vorbehandelten Polyäthylenfolie und Aluminiumblechen, gleicher Legierung wie oben, unter Anwendung der Klebmittel hergestellt. Die Bedingungen zur Aushärtung der Klebmittel sind wie oben angegeben.

Sämtliche verwendeten Aluminiumbleche werden entfettet und einem Chromat-Schwefelsäure-Beizprozeß (Pickling-Beize) unterzogen.

In Tabelle 2 sind die erhaltenen Festigkeitswerte angeführt, die alle bei einer Prüftemperatur von 20°C erhalten wurden. Zum Vergleich ist ein Kleber gemäß dem Stand der Technik (DE-AS 25 24 197) aufgeführt, dessen chemische Zusammensetzung aus Tabelle 1 hervorgeht.

Tabelle 2

Anwendungstechnische Prüfung der Klebmittel

| Klebmittel-rezeptur Nr. | Binde-festigkeit DIN 53 283 $N/mm^2$ | Winkelschäl-festigkeit DIN 53 282 $N/mm$ | Trommelschäl-festigkeit DIN 53 295 $N \cdot mm/mm$ |
|---|---|---|---|
| 1 | 31 | 5,5 | 285 |
| 2 | 29 | 5,3 | 290 |
| 3 | 32 | 6,2 | 305 |
| 4 | 30 | 6,1 | 306 |
| 5 | 30 | 6,0 | 298 |
| 6 | 31 | 5,9 | 295 |
| 7 | 31 | 6,0 | 302 |
| 8 | 30 | 5,8 | 295 |
| 9 | 29 | 5,1 | 280 |
| 10 | 31 | 4,9 | 296 |
| 11 | 32 | 5,2 | 315 |
| 12 | 30 | 5,4 | 305 |
| 13 | 29 | 5,5 | 300 |
| Vergleichs-kleber | 26 | 3,8 | 125 |

Patentansprüche:

1. Hitzehärtbares Klebmittel, welches als wirksame Bestandteile

a) 20 bis 80 Gew.-% eines Copolymerisates, welches durch Polymerisation von

$a_1$) 20 bis 45 Gew.-% Acryl- und/oder Methacrylnitril,

$a_2$) 35 bis 65 Gew.-% eines oder mehrerer Alkylester der Acryl- und/oder Methacrylsäure mit 1 bis 12 C-Atomen im Alkylrest,

$a_3$) 3 bis 20 Gew.-% Acryl-, Methacryl- und/oder Itacon-säure,

$a_4$) O bis 15 Gew.-% Acryl- und/oder Methacrylamid, wobei die Summe von $a_3$) und $a_4$) mindestens 10 Gew.-% betragen muß,

$a_5$) O bis 10 Gew.-% N-Vinylpyrrolidon,

erhalten worden ist, wobei die Summe der Monomeren $a_1$) bis $a_5$) 100 Gew.-% ergeben muß und wobei das Copolymerisat eine Grenzviskosität von O,1 bis O,8 $\underline{/}$ 100 ml $\cdot$ g$^{-1}$ $\underline{/}$ bei 20$^\circ$C in Methylacetat aufweist,

b) 10 bis 70 Gew.-% eines Epoxidharzes und/oder eines Glycidyl-gruppen enthaltenden Phenolformaldehydharzes,

c) O,2 bis 15 Gew.-% eines in der Wärme wirksamen Härters für die Komponente b),

d) O bis 5 Gew.-% eines Beschleunigers für die Reaktion der Komponente b) mit den Komponenten a) und c), wobei die Summe a) bis d) 100 Gew.-% ergeben muß,

gegebenenfalls neben üblichen Zusätzen, wie Klebhilfsmittel, Haftvermittler, Pigmente und Füllstoffe, enthält.

2. Klebmittel nach Anspruch 1, dadurch gekennzeichnet, daß es

35    bis 75 Gew.-% der Komponente a),
20    bis 55 Gew.-% der Komponente b),
0,5  bis 10 Gew.-% der Komponente c) und
0,05 bis  2 Gew.-% der Komponente d),

enthält.

3. Verfahren nach Anspruch 1 oder 2, dadurch gekennzeichnet, daß die Grenzviskosität der Komponente a) 0,2 bis 0,55 $\underline{/}$ 100 ml · g$^{-1}$ $\underline{/}$ bei 20°C in Methylacetat beträgt.

4. Klebmittel nach einem oder mehreren der vorhergehenden Ansprüche, dadurch gekennzeichnet, daß es als Komponente c) mehrbasische organische Carbonsäuren bzw. deren Anhydride oder aromatische Polyamine oder Dicyandiamid oder dessen Derivate enthält.

5. Klebmittel nach einem oder mehreren der vorhergehenden Ansprüche, dadurch gekennzeichnet, daß es als Komponente d) tertiäre Amine enthält.

6. Klebmittel nach einem oder mehreren der vorhergehenden Ansprüche, dadurch gekennzeichnet, daß es in Form einer wäßrigen Dispersion vorliegt.

7. Verwendung eines Klebmittels nach einem oder mehreren der vorhergehenden Ansprüche zur Verklebung von Kunststoffen mit Metallen oder von Metallen miteinander.

0016247

| Kategorie | Kennzeichnung des Dokuments mit Angabe, soweit erforderlich, der maßgeblichen Teile | betrifft Anspruch |
|---|---|---|
| | CH - A - 456 817 (BORDEN) <br> * Ansprüche * <br><br> -- | 1-7 |
| | DE - B - 2 641 108 (DEGUSSA) <br> * Ansprüche; Spalten 4,5 * <br><br> -- | 1-7 |
| D | DE - A - 2 524 197 (GOLDSCHMIDT) <br> * Ansprüche * <br><br> ---- | 1-7 |

**EINSCHLÄGIGE DOKUMENTE**

KLASSIFIKATION DER
ANMELDUNG (Int.Cl. 3)

C 08 G 59/42
C 09 J 3/16
3/14

RECHERCHIERTE
SACHGEBIETE (Int. Cl. 3)

C 08 G 59/42
C 09 J 3/16
3/14

KATEGORIE DER
GENANNTEN DOKUMENTE

X: von besonderer Bedeutung

A: technologischer Hintergrund

O: nichtschriftliche Offenbarung

P: Zwischenliteratur

T: der Erfindung zugrunde
liegende Theorien oder
Grundsätze

E: kollidierende Anmeldung

D: in der Anmeldung angeführtes
Dokument

L: aus andern Gründen
angeführtes Dokument

&: Mitglied der gleichen Patentfamilie, übereinstimmendes
Dokument

Der vorliegende Recherchenbericht wurde für alle Patentansprüche erstellt.

| Recherchenort | Abschlußdatum der Recherche | Prüfer |
|---|---|---|
| Den Haag | 20-06-1980 | DERAEDT |

EPA form 1503.1 06.78